# EUROPEAN PATENT APPLICATION

(11) **EP 4 763 382 A1**
(43) Date of publication of application: **24.06.2026**
(21) Application number: 24383403.3
(22) Date of filing: 18.12.2024
(51) Int. Cl.: B22F 12/30, B22F 10/28, B22F 12/52, B22F 12/57, B22F 12/67, B29C 64/153, B29C 64/245, B29C 64/329, B29C 64/343, B33Y 30/00, B33Y 40/00

(54) **ADDITIVE MANUFACTURING MACHINE FOR PRODUCING PARTS USING POWDER BED FUSION AND LASER TECHNOLOGY**

(71) Applicant: LORTEK S. COOP., 20240 Ordizia (Gipuzkoa) (ES)
(72) Inventor: SAN SEBASTIAN ORMAZABAL, Maria, 20240 ORDIZIA (ES); BADIAS LAZKANOITURBURU, Irkus, 20240 ORDIZIA (ES); GARCIANDIA IBAÑEZ, Fermín, 20240 ORDIZIA (ES)
(74) Representative: Galbaian S.Coop.

(57) **Abstract**

An additive manufacturing machine comprising a main build chamber (4) with a main build platform (5) vertically movable within it, a main feed system (8), and a module (20) for manufacturing a reduced volume part (50), comprising an auxiliary build chamber (22) insertable into the main build chamber (5), an auxiliary build platform (23) attachable to the main build platform (5) and vertically movable in the auxiliary build chamber (22) together with the main build platform (5). The module (20) further comprises an auxiliary hopper (26) independent of the main feed system (8), and comprising a dosing mechanism (30) configured to provide a powder material quantity of the reduced volume part (50) over a working surface of the module (20).

## Description

### TECHNICAL FIELD

The present invention relates to an additive manufacturing machine manufacturing parts using powder bed fusion and laser technology.

### PRIOR ART

In additive manufacturing processes using powder bed fusion and laser technology, the powder of the part material to be manufactured is supplied and distributed on a build platform via a scraper to form a first layer. A laser beam then melts the cross-section of the part corresponding to the first layer, after which the build platform is lowered vertically by a distance corresponding to the thickness of the first layer. Subsequently, a new layer of powder is deposited on top of the previous layer, the laser melting the cross-section of the part corresponding to the second layer. The unmelted powder that accumulates on the build platform is called the powder bed. The process is repeated successively until the part has been manufactured.

Depending on the type of additive manufacturing machine, the powder material delivery system may be of the communicating vessel or gravity type. In the case of communicating vessel delivery systems, the machine comprises a feed platform that operates synchronously with the build platform. The feed platform lifts the stored powder material vertically onto the work table while the build platform descends, with both platforms working in unison. In contrast, in the case of gravity feed, the material is stored in a hopper from which it is fed to the build table by gravity.

Additive manufacturing machines based on powder bed fusion technology require large quantities of powder to be able to manufacture the corresponding parts, which is a disadvantage when the same machine is to be used to manufacture small parts as well, as the amount of powder required is significant. In order to solve this problem, there are different solutions available in the state of the art that adapt the volume of working space or volume of material used according to the needs.

Thus, in EP2377672A1 a process is disclosed for reducing the building volume by means of additional sidewalls and an additional part on the existing build platform or by replacing the build platform with another one that fits the additional sidewalls, the sidewalls including temperature sensors, heating or cooling elements for the temperature control unit.

US 10,065,242 B1 describes a powder bed fusion additive manufacturing machine comprising a frame in the build chamber defining an adjustable working volume. In particular, the frame comprises four movable walls, a base and two motors that drive respective screws so that two of the walls move in opposite directions, causing the other two walls to also move and reduce the volume of the frame, with the aim of reducing material waste in manufacturing.

Finally, EP3204178A1 discloses a module insertable into an additive manufacturing apparatus, in particular into a master build chamber of the apparatus, defining a reduced volume secondary build chamber. The module comprises the secondary build chamber, a movable secondary build platform in the secondary build chamber that supports the powder bed during additive manufacturing of the part, a dosing chamber where the material powder is stored, and a dosing piston that can be moved in the dosing chamber to push the powder from the dosing chamber onto the work table. The secondary build platform and dosing piston are mechanically linked to a drive mechanism that actuates the movement of a master build platform in the master build chamber.

### DISCLOSURE OF THE INVENTION

The object of the invention is to provide an additive manufacturing machine for manufacturing parts using powder bed fusion and laser technology, as defined in the claims.

The additive manufacturing machine according to the invention comprises a main build chamber with a main build platform vertically displaceable in the main build chamber, a drive for vertically displacing the main build platform in the main build chamber, a main feed system configured to provide a quantity of powder of a material of the part to be manufactured to a main work table of the machine, and a recoating system configured to homogeneously distribute the quantity of powder supplied by the main feed system over the main build platform.

The additive manufacturing machine further comprises a module that is inserted into the machine when reduced volume parts are to be manufactured. The module comprises an auxiliary build chamber which can be inserted into the main build chamber, the auxiliary build chamber being smaller in volume than the main build chamber. The module comprises an auxiliary build platform attachable to the main build platform, so that the auxiliary build platform moves vertically in the auxiliary build chamber when the main build platform is moved vertically by the drive. That is to say, the auxiliary build platform moves vertically in solidarity with the main build platform when the main build platform is operated by the drive.

The module further comprises an auxiliary hopper for storing a material powder of reduced volume part, the auxiliary hopper being independent of the main feed system, and the auxiliary hopper comprising a dosing mechanism configured to provide a quantity of material powder of the reduced volume part over a working surface of the module when the dosing mechanism is arranged in an operational position relative to the auxiliary hopper. The auxiliary hopper has a much smaller volume than the original hopper contained in the machine's feed system. This solves the problem with the main feed systems that require a minimum amount of powder to function correctly, preferably more than 10 kg, otherwise the dosing mechanisms do not function correctly. It also avoids the circulation of powder through ducts to the main work table from the original hopper of the feeding system, facilitating the change of material in the case of small series of small volume parts.

With the module, large-volume parts requiring large amounts of material powder or reduced volume parts requiring small amounts of powder, e.g. parts made of experimental and/or test materials, can be produced on the same machine. In addition, the module is easy to clean.

These and other advantages and features of the invention will become apparent in view of the figures and the detailed description of the invention.

### DESCRIPTION OF THE DRAWINGS

Figure 1 shows a partial sectional view of an embodiment of an additive manufacturing machine for the manufacture of parts using a powder bed fusion and laser technology according to the invention, with a module and an auxiliary recoater in a rest position.
Figure 2 shows a detail of a recoating system of the additive manufacturing machine shown in Figure 1.
Figure 3 shows a perspective view of the module and the auxiliary recoater of the additive manufacturing machine shown in Figure 1.
Figure 4 shows a sectional view of the module and the auxiliary recoater shown in Figure 3.
Figure 5 shows a perspective view of the module attached to a main work table of the additive manufacturing machine, and of the auxiliary recoater of the additive manufacturing machine shown in Figure 1, in an operational position.
Figures 6(a) and 6(b) show respectively a sectional detail view of an auxiliary hopper and a dosing mechanism of the module shown in Figure 1 in a closed position prior to an operational position and in an operational position.
Figure 7 shows another perspective view of the module and the auxiliary recoater in the rest position shown in Figure 3, where the main work table is not shown.
Figure 8 shows a plan view of the module and the auxiliary recoater in the rest position shown in Figure 2, where the main work table is not shown.
Figure 9 shows a perspective view of the auxiliary recoater of the additive manufacturing machine shown in Figure 1.
Figure 10 shows a detail of the auxiliary recoater shown in detail in Figure 9.
Figure 11 shows a partial sectional view of the additive manufacturing machine shown in Figure 1 without the module and the auxiliary recoater.

### DETAILED DISCLOSURE OF THE INVENTION

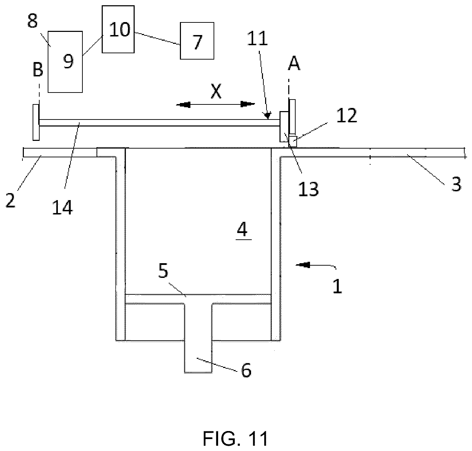

Figure 11 shows in part an embodiment of an additive manufacturing machine according to which successive layers of powdered material are deposited forming a powder bed on a main build platform 5 of the additive manufacturing machine 1 until a part is manufactured. In each layer of material deposited on the main build platform 5, a cross-section of the part to be manufactured is melted, and the main build platform 5 is subsequently lowered by a distance corresponding to the thickness of the previously melted layer of material, so that a new layer is deposited on top of the previous one and the process is repeated successively until the part is manufactured. The main build platform 5 supports the powder bed and the part as it is formed layer by layer.

The additive manufacturing machine 1 comprises a main build chamber 4 housing the main build platform 5, the main build platform 5 being able to move vertically in the main build chamber 4 by means of a drive 6. The additive manufacturing machine 1 further comprises a main feed system 8 (shown schematically in the figures, the size and position on the machine shown in the figures not being limiting) configured to deliver the powder of the part material to be manufactured onto a main work table 3 of the additive manufacturing machine 1, and a recoating system 11 configured to spread the powder of the material delivered by the main feed system 8 onto the main build platform 5 in the form of a layer. The recoating system 11 comprises a main recoater 12, displaceable with respect to the main build platform 5 in a drive direction X, which is intended to smooth or homogenize the material powder distributed over the main build platform 5. The main recoater 12 is moved between two limit switches A and B. For this purpose, the recoating system 11 comprises two guides 14 (only one guide shown in Figure 11) extending in the drive direction X, and a movable support 13 which moves along each guide 14 commanded by a control unit 10. Each end of the main recoating 11 is fixed to the corresponding movable support 13.

Once the layer has been deposited on the main build platform 5, an energy source 7 of the additive manufacturing machine 1 melts the cross-section of the corresponding part with the powder layer, and the main build platform 5 is then lowered vertically by a distance corresponding to the thickness of the powder layer.

Preferably, each layer of powder has a thickness of at least 20 microns. Preferably, the energy source 7 is a laser, although in other embodiments any other energy source capable of fusing the powder material could be used. The part of the unmelted powder that accumulates on the main build platform 5 forms the powder bed 51, while the remaining unmelted powder present on the main work table 3 is pushed by the main recoater 12 into a container of the machine not shown.

The additive manufacturing machine 1 further comprises a control unit 10 configured to control the power source 7, and the main feed system 8. The control unit 10 is further configured to regulate the vertical displacement of the main build platform 5, and/or the displacement of the main recoater 12 along the drive direction X, between the limit switches A and B.

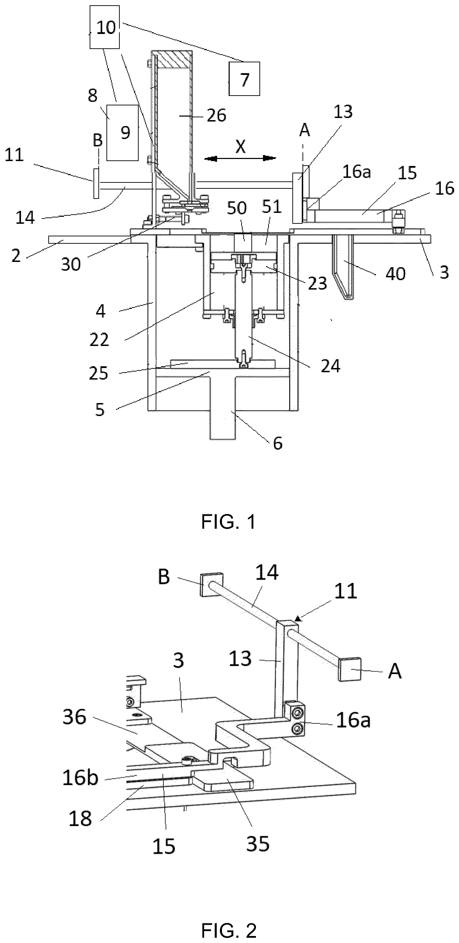

In the embodiment shown in the figures, the main feed system 8 (shown schematically in Figures 1 and 11) is a gravity feed. Thus, the material powder is stored in a main hopper 9 of the main feed system 8, from which the powder is fed to the main manufacturing table 3.

In other embodiments not shown, the main feed system could be of the communicating vessel type. In that case, the additive manufacturing machine would comprise a feed chamber housing the powder material of the part to be manufactured, with a feed platform operating in synchronization with the main build platform 5. The feed platform would vertically lift the stored powder material up to the main worktable 3 while the main build platform 5 would lower, with both platforms working simultaneously.

Figure 1 shows an embodiment of the additive manufacturing machine 1 according to the invention comprising the features described for the additive manufacturing machine 1 shown in Figure 11 except for the main recoater 12. For ease of understanding, the same numerical references have been used as those used for the description of the additive manufacturing machine 1 in Figure 11.

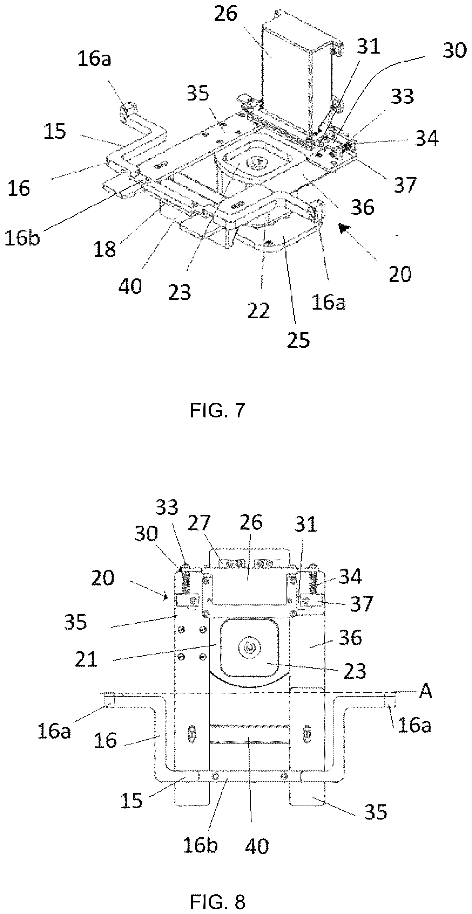

The additive manufacturing machine 1 according to the invention further comprises a module 20 which is used when reduced volume parts 50 are to be manufactured (shown in Figures 1 to 8). That is to say, when it is necessary to manufacture volume-reduced parts, the module 20 is inserted into the additive manufacturing machine 1 shown in Figure 1 and adapted for the manufacture of volume-reduced parts. The module 20 is removable and is fixed to the main work table 3 of the additive manufacturing machine 1. The module 20 comprises an auxiliary build chamber 22 which is arranged housed in the main build chamber 5, and an auxiliary build platform 23 attachable to the main build platform 5, so that, the auxiliary build platform 23 moves vertically in the auxiliary build chamber 22 when the main build platform 5 is moved vertically by the drive 6. The auxiliary build platform 23 is attached to the main build platform 5 via a rod 24 which connects the auxiliary build platform 23 solidly to a base 25 which is attached to the main build platform 5.

The module 20 further comprises an auxiliary hopper 26 in which the powder of material required to manufacture the reduced volume part 50 is stored, the auxiliary hopper 26 being independent of the main feed system 8 of the machine 1. The auxiliary hopper 26 has a lower storage capacity than the main hopper 9. Preferably, the auxiliary hopper 26 can store up to 5 kg, whereas the main hopper 9 could store up to 100 kg. The auxiliary hopper 26 comprises a dosing mechanism 30 configured to provide a quantity of the reduced volume part material powder 50 onto a working surface 21 of the module 20. Preferably, the auxiliary hopper 26 is fixed via a bracket 27 to the working surface 21 of the module 20.

On the other hand, the recoating system 11 further comprises an auxiliary recoater 15 which replaces the main recoater 12 when the module 20 is used in the additive manufacturing machine 1, the auxiliary recoater 15 moving relative to the main build platform 5 between the same limit switches A and B of the main recoater 12. Each end of the auxiliary recoater 15 is respectively fixed to the movable support 13, so that the auxiliary recoater 15 moves along guides 14.

In addition, the auxiliary recoater 15 is configured to actuate the dosing mechanism 30 during its movement between the travel ends A and B.

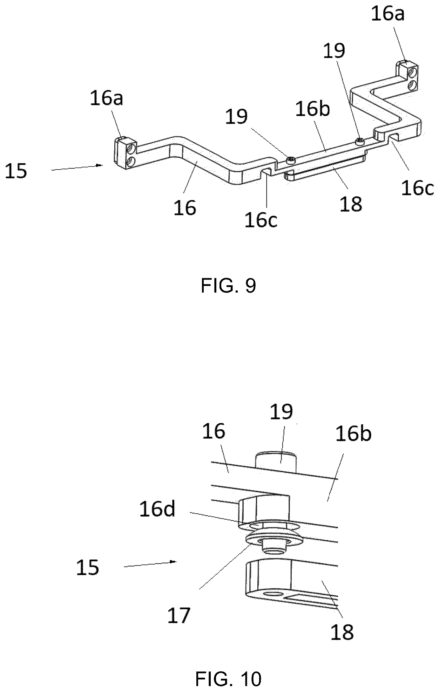

The auxiliary recoater 15, shown in detail in Figures 9 and 10, comprises a scraper 18, and a support 16 with a central part 16b to which the scraper 18 is attached and ends 16a offset with respect to the central part 16b, i.e. the central part 16b and the ends 16a are not aligned with each other. Thus, when the ends 16b are arranged at one of the limit switches B, the central part 16b holds the dosing mechanism 30 in an operative position. The support 16 is made of one piece.

The scraper 18 is coupled to the central part 16b of the auxiliary recoater 15 via a pair of coupling elements 19. The coupling between the scraper 18 and the auxiliary recoater 15 further comprises a conical washer 17 for each coupling element 19 between the central part 16b of the auxiliary recoater 15 and the scraper 18. The central part 16b of the support 16 of the auxiliary recoater 15 includes tapered recesses 16d in which the corresponding tapered washer 17 is at least partially housed, making it possible to regulate the distance of the scraper 18 from the working surface 21 via the coupling. When the auxiliary recoater 15 is attached to the respective movable supports 13 of the recoating system 11, the recoater can tilt with respect to the working surface 21 maintaining an uneven distance of the scraper 18 to the working surface 21. By means of the coupling described in this paragraph, this deviation is minimized as the distance can be minimally adjusted.

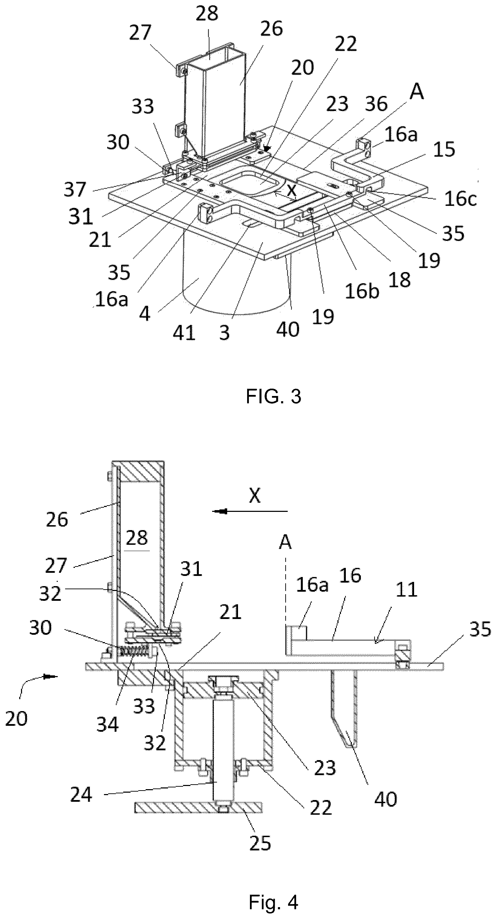

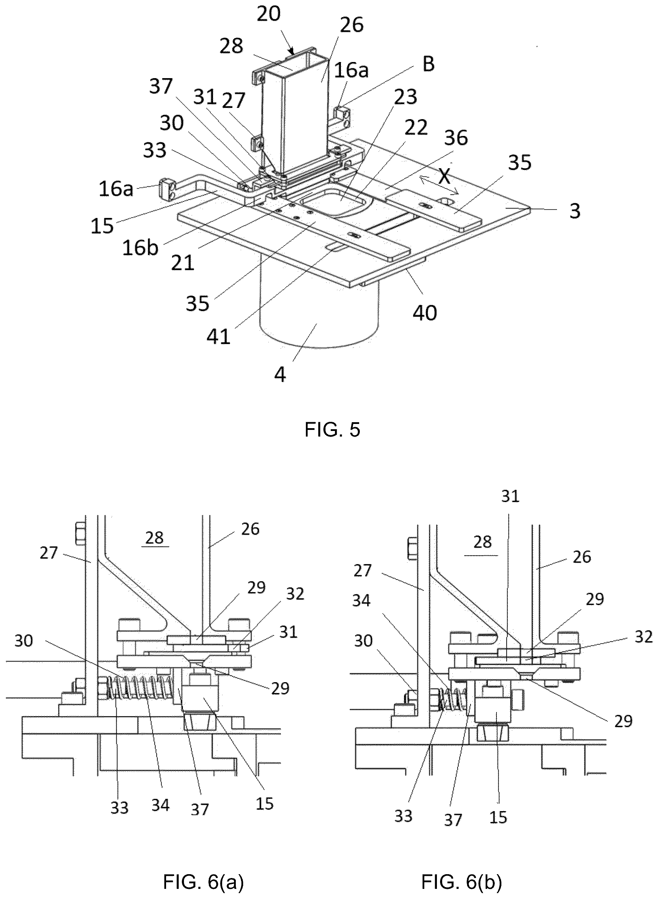

On the other hand, the dosing mechanism 30 of the auxiliary hopper 26 comprises a dosing plate 31 movable with respect to an opening 29 of the auxiliary hopper 26 between a closed position, shown in Figures 3, 4 and 6(a), in which no material powder falls from the auxiliary hopper 26, and the operating position, shown in Figures 5 and 6(b), in which material powder falls onto the auxiliary worktable 21. The dosing plate 31 comprises a slot 32 which, in an operating position, is arranged at least partially overlapping with the opening 29 of the auxiliary hopper 26. By operating position is meant not only the position in which the slot 32 of the dosing plate 31 is aligned or fully overlapped with the opening 29 of the auxiliary hopper 26 so that the dosing is maximized, but includes all relative positions of the dosing plate 31 with respect to the opening 29 of the auxiliary hopper 26 in which at least a part of the slot 32 of the dosing plate 31 is overlapped with the opening 29 of the auxiliary hopper 26 allowing the passage of a quantity of material powder from the auxiliary hopper 26 to the auxiliary working surface 21. The dosing mechanism 30 is actuated when the dosing plate 31 is pushed and displaced by the auxiliary recoater 15 in its travel towards one of the limit switches B, the dosing plate 31 moving from the closed position to the final operating position (which is the operating position at which the dosing is maximal), the final operating position coinciding with the auxiliary recoater 15 at the limit switch B.

The dosing mechanism 30 further comprises guides 33 extending in the direction of displacement X of the auxiliary recoater 15 which guide the displacement of the dosing plate 31 with respect to the auxiliary hopper 26, and elastic elements 34 configured to act on the dosing plate 31 by moving it from the operating position to the closed position when the auxiliary recoater15 ceases to exert pressure on the dosing plate 31.

In the embodiment shown in the figures, the elastic elements 34 of the dosing mechanism 30 are compression springs, and the guides 33 are screws which pass through the compression springs. Preferably, the dosing plate 31 is coupled to the screws 33 via a respective connecting element 37, the dosing plate 31 being displaced solidly together with the connecting elements 37 with respect to the respective screws 33.

The adaptation of the additive manufacturing machine 1 so that it can manufacture parts in small volumes is carried out by the module 20 and the auxiliary recoater 15 without affecting the control unit 10 of the additive manufacturing machine 1. Thus, by directly modifying the software of the control unit 10, the powder dosing time of the auxiliary hopper 26 can be. Taking into account that the dosing mechanism 30 is in the final operating position, in which the dosing is maximum, when the ends of the auxiliary recoater 15 are arranged at one of the limit switches B, by controlling the stopping time of the auxiliary recoater 15 in said limit switch position B, the dosed powder quantity is controlled, thus being able to optimize the dosing of the material powder on the working surface 21.

On the other hand, the module 20 comprises longitudinal plates 35 which are arranged fixed on the working surface 21 of the module 20 extending in the drive direction X of the auxiliary recoater 15, on both sides of the auxiliary build chamber 22, so that the longitudinal plates 35 prevent the dispersion of the material powder outside the space delimited by both longitudinal plates 35 during the travel of the auxiliary recoater 15 in the drive direction X. Preferably, the longitudinal plates 35 extend from the auxiliary hopper 26 to at least one outlet opening 41 of the main work table 3. Preferably, the longitudinal plates 35 extend from the auxiliary hopper 26 to at least one outlet opening 41 of the main work table 3. The module 20 comprises a container 40 for collecting the excess powder which is arranged under the main work table 3, in particular under the outlet opening 41. Preferably, the container 40 for collecting dust is arranged fixed to the longitudinal plates 35.

One of the longitudinal plates 35 comprises a recess 36 to promote a protective gas flow over the auxiliary build platform 23. The protective gas used is inert gas or equivalent, preferably argon gas or nitrogen gas. The protective gas flow is a laminar flow that has a protective purpose by entraining laser-generated spatter and/or oxide particles. Preferably, the recess 36 is arranged in alignment with the auxiliary build platform 23.

Recoater also means a brush or a collector or any other similar item known in the state of the art whose function is to evenly distribute the powder of a material in the form of a layer. Scraper also means a blade or any other similar element known in the state of the art for homogeneously distributing the powder of a material in the form of a layer.

## Claims

1. Additive manufacturing machine for manufacturing parts using a laser and powder bed fusion technology, the additive manufacturing machine (1) comprising a main build chamber (4) with a main build platform (5) vertically movable in the main build chamber (4), a drive (6) configured to vertically move the main build platform (5) in the main build chamber (4), a main feed system (8) configured to provide a quantity of powder of a material of the part to be manufactured to a main work table (3) of the machine (1), a recoating system (11) configured to evenly distribute the quantity of powder provided by the main feed system (8) over the main build platform (5), and a module (20) for manufacturing a reduced volume part (50), the module (20) comprising an auxiliary build chamber (22) insertable into the main build chamber (5), and an auxiliary build platform (23) attachable to the main build platform (5) and vertically movable in the auxiliary build chamber (22) together with the main build platform (5) when the main build platform (5) is moved by the drive (6), **characterised in that** the module (20) further comprises an auxiliary hopper (26) for storing a material powder of the reduced volume part (50), the auxiliary hopper (26) being independent of the main feed system (8), the auxiliary hopper (26) being arranged on a working surface (21) of the module (20), and the auxiliary hopper (26) comprising a dosing mechanism (30) configured to provide a quantity of the material powder of the reduced volume part (50) on the working surface (21) of the module (20) when the dosing mechanism (30) is arranged in an operating position with respect to the auxiliary hopper (26).

2. Additive manufacturing machine according to the preceding claim, wherein the recoating system (11) comprises a main recoater (12) movable with respect to the main build platform (4) in a drive direction (X) between limit switches (A,B), and an auxiliary recoater (15) which replaces the main recoater (12) when the module (20) is used, the auxiliary recoater (15) being movable with respect to the main build platform (5) in the drive direction (X) between the same limit switches (A,B), the auxiliary recoater (15) being configured to drive the dosing mechanism (30) of the auxiliary hopper (26) during its travel between the limit switches (A,B).

3. Additive manufacturing machine according to the preceding claim, wherein the auxiliary recoater (15) comprises a support (16) with a central part (16b) wherein a scraper (18) is fixed, and ends (16a) movable between the limit switches (A,B), the central part (16b) being offset with respect to the ends (16a) so that the central part (16b) keeps the dosing mechanism (30) in the operating position when the ends (16a) are arranged at one of the limit switches (B).

4. Additive manufacturing machine according to the preceding claim, wherein the scraper (18) is coupled to the central part (16b) of the auxiliary recoater (15) through at least one coupling element (19), the coupling including a conical washer (17) coupled to the coupling element (19) between the central part (16b) of the auxiliary recoater (15) and the scraper (18), making it possible to regulate the distance of the scraper (18) to the working surface (21) through the coupling.

5. Additive manufacturing machine according to any of claims 2 to 4, wherein the recoating system (11) comprises two guides (14) extending in the drive direction of the auxiliary recoater (15), and a movable support (13) movable along each guide (14), each end (16a) of the auxiliary recoater (15) being fixed to the corresponding movable support (13).

6. Additive manufacturing machine according to any of the preceding claims, wherein the dosing mechanism (30) of the auxiliary hopper (26) comprises a dosing plate (31) movable with respect to an opening (29) of the auxiliary hopper (26) between a closed position and the operating position when pushed by the auxiliary recoater (15), the dosing plate (31) having a slot (32) which, in the operating position, is at least partially overlapping opening (29) of the auxiliary hopper (26) to allow the powder to exit from the auxiliary hopper (26).

7. Additive manufacturing machine according to claim 6 or 7, wherein the dosing plate (31) is arranged in an end operating position when the auxiliary recoater (15) reaches the limit switches (B), the end operating position being the one in which the slot (32) of the dosing plate (31) is aligned with the opening (29) of the auxiliary hopper (26) so that the dosing is maximal.

8. Additive manufacturing machine according to the preceding claim, wherein the dosing mechanism (30) further comprises at least one guide (33) guiding the displacement of the dosing plate (31) with respect to the auxiliary hopper (26) and at least one elastic element (34) configured to act on the dosing plate (31) moving it from the operating position to the closed position when the auxiliary recoater (15) ceases to exert pressure on the dosing plate (31).

9. Additive manufacturing machine according to any of the preceding claims, wherein the module (20) further comprises longitudinal plates (35) which are arranged on the working surface (21) of the module (20) extending in the drive direction (X) of the auxiliary recoater (15) on both sides of the auxiliary build chamber (22), so that the longitudinal plates (35) prevent the dispersion of the material powder during the travel of auxiliary recoater (15).

10. Manufacturing machine according to the preceding claim, wherein the main work table (3) comprises an outlet opening (41) for excess material powders, the longitudinal plates (35) extending from the auxiliary hopper (26) to at least the outlet opening (41).

11. Manufacturing machine according to claim 9 or 10, wherein at least one of the longitudinal plates (35) comprises a recess (36) to promote a flow of a protective gas over the auxiliary build platform (23).

12. Additive manufacturing machine according to any of claims 2 to 11, comprising a control unit (10) configured to control a dosing time, the dosing time being the time during which the auxiliary recoater (15) is held at one of the limit switches (B).

13. Additive manufacturing machine according to any of the preceding claims, wherein the module (20) is attached to the main work table (3) of the machine (1).
